# EUROPEAN PATENT SPECIFICATION

(11) **EP 1 723 531 B1**
(45) Date of publication and mention of the grant of the patent: **17.11.2010**
(21) Application number: 04715712.8
(22) Date of filing: 27.02.2004
(51) Int. Cl.: G06F 13/14, G06F 15/177, H04L 29/08, H04L 12/26, H04L 29/14, H04L 12/58, H04L 12/24

(54) **COMMUNICATIONS SYSTEM AND METHOD FOR ACCESSING A SERVER AND PREVENTING ACCESS BLOCKING AND MINIMIZING NETWORK TRAFFIC**
KOMMUNIKATIONSSYSTEM UND VERFAHREN ZUM ZUGREIFEN AUF EINEN SERVER UND ZUM VERHINDERN VON ZUGANGSBLOCKIERUNGS- UND MINIMIERENDEM NETZWERKVERKEHR
SYSTEME ET PROCEDE DE COMMUNICATION PERMETTANT D'ACCEDER A UN SERVEUR, D'EMPECHER LE BLOCAGE D'ACCES ET DE MINIMISER LE TRAFIC DE RESEAU

(43) Date of publication of application: 22.11.2006
(73) Proprietor: Teamon Systems, Inc., Issaquah, Washington 98027 (US)
(72) Inventor: ROY, Shaibal, Sammamish, WA 98075 (US)
(74) Representative: Fennell, Gareth Charles
(86) International application number: PCT/US2004/005900
(87) International publication number: WO 2005/093587

(56) References cited:
- EP-A- 0 491 367
- EP-A- 1 259 036
- US-A- 5 774 668
- US-B1- 6 317 786
- US-B1- 6 401 121

## Description

### Field of the Invention

The present invention relates to network communications, and more particularly, the present invention relates to accessing Internet servers.

### Background of the Invention

The Internet is growing exponentially and temporary network outages are commonplace on the Internet. A client, whether operating a personal computer at home, in a local area network, or from a mobile, wireless device, often attempts access to a server on the Internet (e.g., a website, an e-mail server), but fails to connect to the server and initiate the communications session. After repeated failures in accessing a server, a user may wait a period of time and try again, perhaps making a successful connection or failing to make a connection. In the case of failing to connect, the server could be actively blocking a connection request. In other instances, however, a "failed" access attempt will be successful if retried after a sufficient delay. It has been found that sometimes a server may actively block or throttle connection requests based upon the originating IP address. At other times, the server or the Internet connectivity to the server may encounter intermittent and/or transient failures, including service and network failures.

It is necessary then to distinguish between a permanent or persistent transient failure in accessing the server, such as by a server consistently blocking access, and an intermittent or transient failure caused by other reasons. If it were possible to monitor every mail server or other Internet server to be accessed, then it would be possible to blacklist a particular server or devise a different connection engine route for a particular server. It would also be advantageous if some decision could be automatically made to determine when any reattempts should be made at accessing a server, and whether a set period of time should be allowed to pass before reattempting access, or if a different connection engine should be used to initiate communication.
EP-0491367-A2 discloses a queue manager for controlling the execution of requests for the transport of messages from users to destinations. Each request includes a message and an identification of a destination. The queue manager includes a queue for storing pending requests and a dispatcher task for creating a worker task to execute each request and provides a method for adapting the execution of requests to constraints and characteristics of destinations and communications links.

### Summary of the Invention

The present invention is as set out in the independent claims.

Embodiments of the present claimed invention overcome problems when temporary network outages occur on the Internet and "failed" access attempts are retried. Embodiments of the present invention is also advantageous as an aid to discern when certain servers may actively block a connection request.

In embodiments of the present invention, connection engines can be distributed over multiple subnets and multiple IP addresses to prevent attempts at blocking. A database of failed attempts can be maintained and an intelligent routing server, such as a mobile office platform or other server system, could track the magnitude of failures as problem magnitudes stored in a database. Data can relate to the problem magnitude versus time for a specific connection engine and webpage or server. When a server has to be accessed, for example, as when a client checks an email server,
the database can be consulted to choose a connection engine having a lower problem magnitude for the server of interest. A plurality of engines could be distributed over multiple servers and multiple subnets.

In one embodiment of the present invention, a proxy engine, operative with WAP or SMTP, for example, makes a service request to a connection engine, which uses a POP, IMAP or HTTPmail protocol, for example. The connection engine attempts to access the server and, if errors are received, the database can store the failure for a particular connection engine and server pair by assigning a problem magnitude and adding it to a current exponentially decayed database entry along with a time stamp. The connection engine can make a determination of the type of error to distinguish network failures from other types of errors such as incorrect passwords, badly formed requests or similar errors not attributed to network failures. If the problem magnitude is below a set threshold, the next attempt is made after a sufficient delay. If the problem magnitude exceeds a threshold, the system will not retry and instead waits for the problem magnitude to decay to below the threshold before retrying. The delay can be a function of a preset rate of decay of the problem magnitude. A different connection engine with a lower problem magnitude for the same server can also be selected in another embodiment of the present invention.

In another embodiment of the present invention, a communications system includes a database for storing a problem magnitude relating to failed attempts in accessing a server using the connection engines. An intelligent routing engine is operative with the database, queries the database and delays any further attempts at accessing the server using a first connection engine if a problem magnitude exceeds a predetermined threshold. A communications system can also include a plurality of connection engines that can be used by a client for accessing a server of a server on an Internet Protocol (IP) network. These connection engines can be distributed among a plurality of subnets and/or IP addresses and other servers.

A method of an embodiment of the present invention is also disclosed, and in one embodiment of the invention, comprises the steps of attempting access to the server using a first connection engine, assigning a problem magnitude if the attempt at accessing the server has failed, and delaying any further attempts at accessing the server using the first connection engine, if the problem magnitude exceeds a predetermined threshold.

In yet another embodiment of the present invention, a method of accessing a server comprises the steps of distributing connection engines over multiple subnets and/or multiple IP addresses and attempting access to servers using the connection engines. Problem magnitudes are assigned to failures in accessing any servers. The problem magnitude versus time as related to a particular connection engine and server are stored within a database and a connection engine chosen which has minimum problems when a particular server is to be accessed. This decision can be based on queries made to the database. The server could, of course, be an email provider or other server.

### Brief Description of the Drawings

Other objects, features and advantages of the present invention will become apparent from the detailed description of the embodiments of the invention which follows, when considered in light of the accompanying drawings in which:

FIG. 1 is a high level block diagram of a system that includes a network having a number of connection engines distributed among a plurality of subnets and/or IP addresses, a database for storing problem magnitudes, and an intelligent routing engine as part of a mail office platform or other gateway that delays repeated attempts at accessing a server or selects a connection engine for use by a client, such as the illustrated wireless device.

FIG. 2 is high level flow chart showing an example of the algorithm that can be used in the present invention.

FIG. 3 is another flow chart illustrating a more specific example of a method used by the present invention.

FIG. 4 is a block diagram of an exemplary hand-held mobile wireless communications device that can be used in the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

Embodiments of the present invention advantageously overcome the disadvantages of the prior art, which did not accommodate temporary network outages with "failed" access attempts, did not determine whether reattempts at accessing at a server should be initiated, and did not determine whether the server may have been actively blocking a connection request.

In accordance with embodiments of the present invention, connection engines can be distributed over multiple subnets and multiple IP addresses to prevent attempts at blocking access or allow alternative uses of connection engines. A database of failed attempts can be maintained and a problem magnitude system tracks a magnitude of failure for failed attempts at initiating a communications session with a server. The database stores the problem magnitude versus time for a specific connection engine and web page or server pair. When a server has to be accessed to check an email account, for example, the database can be consulted to choose a connection engine with a minimum problem magnitude for the server of interest.

In another embodiment of the present invention, a plurality of different connection engines can be distributed over multiple servers and/or multiple subnets and/or multiple IP addresses. A proxy engine can be operative with a Wireless Application Protocol (WAP), Simple Mail Transfer Protocol (SMTP) or other protocol. The server can make a service request to a connection engine, operative, for example, with a Post Office Protocol (POP), an Internet Mail Access Protocol (IMAP), HTTPmail protocol or other similar protocol.

If various errors are received, a database can store this failure for a particular connection engine and server pair by assigning a problem magnitude, for example, ten (10), and adding it to a current, exponentially decayed entry in the database along with a time stamp. Different errors can be given a different indicator, such as a 4XX error as a persistent transient failure, also known as a network failure. A 5XX error could include other errors unrelated to network errors, for example, an incorrect password or badly formed request. If the problem magnitude is below a predetermined threshold, a new attempt at access can be made after a sufficient delay. If a problem magnitude exceeds a threshold, then the system may not retry, and instead, could wait for the problem to return to below a threshold before retrying. A delay could be a function of a preset rate of decay of the problem magnitude. Also, if it is determined that a server is blocking or is having other connection problems based on an IP address, for example, it is possible to try a different connection engine.

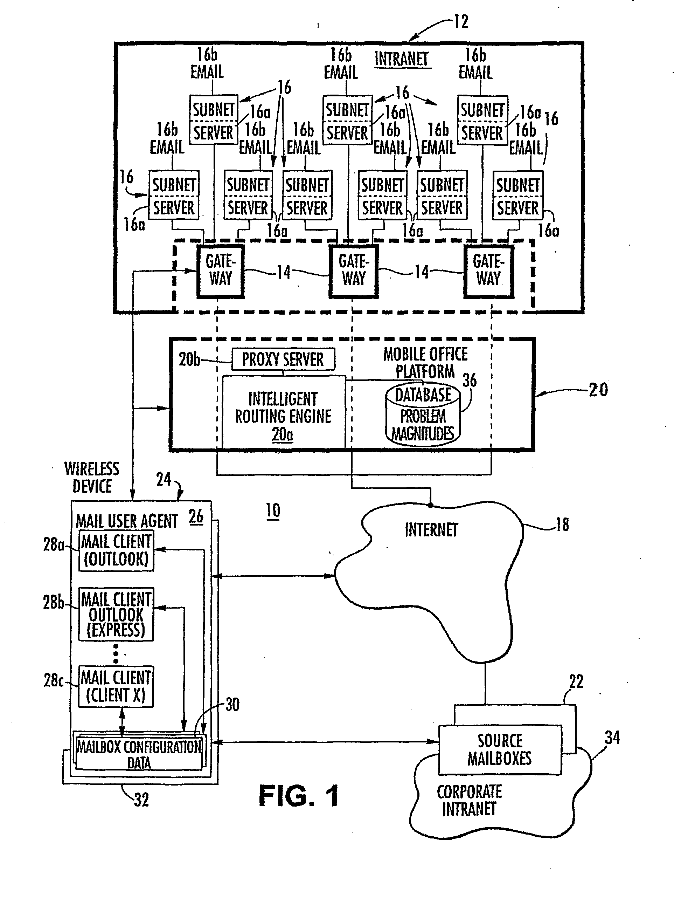

FIG. 1 shows an overall block diagram of an example of a basic communications system **10** and showing examples of the various functions and components that could be used with the present invention. As illustrated, a large corporate intranet **12** could include a number of gateways **14** (although only one is necessary in some instances) operative as servers and/or routers and connected and operative with various subnets **16** and associated servers **16a.** The different subnets **16** can be operative with various email clients, systems and/or servers **16b,** as non-limiting examples.

It should be understood that a subnet **16** as used herein can correspond to a portion of a network, such as the illustrated intranet **12** having a common address component, but subdivided into separate parts or segments. A single shared network address can allow different computers and clients to be connected to the Internet with a single shared network address. It is also possible to have multiple connections to the Internet with different IP addresses, but a shared address could be used for certain areas of the network, each having subnets.

It should also be understood that any portion of an IP address could represent a network number or address and some portion could represent local machine addresses as a host number or address. For example, it is possible to use 16 bits for a network number and 16 bits for a host number. With subnets, some portion of the host address is used for a subnet address. For example 8 bits could be used, but in other schemes, using only part of a third quad or fourth quad could be used. The subnet mask is used to determine what subnet and IP address it belongs and acts as a screen for the numbers to tell which numbers to look at underneath for routing.

The intranet **12** can include one or more gateways **14,** each acting as a network point as an entrance to the Internet **18** or to a server operative as a mobile office platform in this non-limiting example. The gateways could also be an entrance to other networks and/or act as a node or host (end-point) node. The gateways **14** could also be an Internet service provider (ISP), and could be operative as a proxy server and/or a firewall server, and also be associated with a router.

FIG. 1 illustrates the mobile office platform **20** as a server that includes various functions, including software engines operative as an intelligent routing engine **20a** and proxy agent **20b,** and performing other functions, including that of an electronic mail agent for various source mailboxes **22.** It should be understood that the gateways **14** of the intranet **12** could also be operative as intelligent routing engines and Internet service providers (ISP's) as shown by the dotted lines connecting the mobile office platform **20** with the gateways **14.**

As illustrated, a wireless device **24,** such as a hand-held Blackberry unit, includes a mail user agent **26** operative with the server acting as a mobile office platform **20.** The device **22** is also operative with the intranet gateways **14.** The wireless device is only one example of a user system. Other systems, including a personal computer or other mobile device, can be operative with the present invention.

The mobile office platform **20** is operative as a mailbox interface module and includes the intelligent routing engine and a mail agent that communicates with source mailboxes **22.** The wireless device **24** is operative as a mail user agent **26** and could include various email clients, which in this example, correspond to an outlook mail client **28a,** an outlook express mail client **28b,** and a proprietary mail client **28c** (client X), each associated with respective source mailboxes. The mail user agent **26** could also include mailbox configuration data **30** for each of the email clients **28a-c.** It should be understood that the various email clients could be located on different agent systems as part of one or more wireless devices, as illustrated by the second agent system **32,** each having a mail user agent.

In this example, the mail user agent **26** is operative with the mobile office platform **20** acting as an agent for the wireless device **24** to source mailboxes **22** and also as an agent to the Internet **18.** The mail user agent **26** could also be operative with any of the gateways **14** of the intranet **12,** depending on the configuration of the gateways and use of any gateway as an ISP. The source mailboxes could be located on the Internet **18,** a corporate intranet **34,** or both. The mail user agent could also be operative with different email systems in the Internet. The mobile office platform **20** can act as an agent, performing various functions, including various functional and validator modules. It should also be understood that some of the functions of the mobile office platform as an agent can also be downloaded to a user system and operative by a user, as when inputting information into a mobile device or home computer.

As illustrated, the mobile office platform **20** is operative with a database **36** for storing problem magnitudes relating to failed attempts at accessing servers using connection engines. In the present invention, a plurality of connection engines can be used by a client, for example, operative on the mobile, wireless device **24.** These connection engines are preferably distributed among the subnets **16** and/or IP addresses through the various gateways **14** and subnets **16.** The database **36** can store a problem magnitude versus time relating to a particular connection engine and associated servers after attempts have been made to access servers using the connection engines and problem magnitudes have been assigned to any failures in accessing the servers. A connection engine with minimum problems can be selected by the intelligent routing engine **20a** when a particular server is to be accessed based on stored data within the database **36.**

The database **36** could also include data relating to a current problem magnitude for a failed access to a server that is added to a current exponentially decayed entry related to a problem magnitude for accessing the server. The database **36** could include data relating to a problem magnitude versus time for any server and connection engine pair. Problem magnitudes can be assigned for an error based on network failures or other failures unrelated to a network failure, such as an incorrect password and/or poorly formed request. The intelligent routing engine **20a** could be operative with a proxy server module **20b.** A service request could be made using a wireless application protocol (WAP) or simple mail transfer protocol (SMTP). Attempts to access a server could be made using POP, IMAP or HTTPmail protocol.

It should be understood that the wireless application protocol (WAP) is operative with mobile devices and typically includes a mini-browser with requests sent to a gateway or other server using- WAP. The gateway could retrieve information via HTTP from a server and encode the HTTP data with the wireless mark-up language (WML). The WML-encoded data is sent to the wireless device. The wireless application protocol stack can include a wireless application environment to hold tools that wireless Internet content developers use. It can include a wireless session protocol to determine whether a session between a device and a network will be connection oriented or connectionless. A wireless transaction protocol maintains data flow and is operative with a wireless transport layer security to provide security features such as found in the transport layer security (TLS) portion of TCP/IP. A wireless datagram protocol works in connection with a network carrier layer as a bearer.

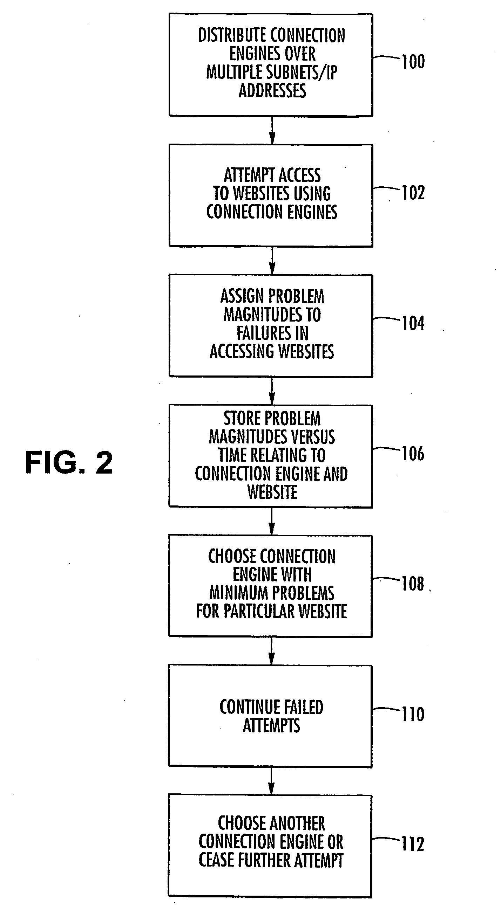

FIG. 2 is a high level block diagram showing an example of the method of the present invention. As illustrated, connection engines are distributed over multiple subnets and/or multiple IP addresses (block 100). Access to servers is attempted using the connection engines (block 102). Problem magnitudes are assigned to failures in accessing servers (block 104). The problem magnitude versus time relating to a particular connection engine and server are stored within a database (block 106). A connection engine having minimum problems when a particular server is to be accessed is chosen based on stored data within the database (block 108). If attempts to access a server still fail after repeated attempts (block 110), another connection engine can be chosen if the problem magnitude exceeds a predetermined threshold or any further attempts at accessing a server can be delayed using a first connection engine, if the problem magnitude exceeds the threshold (block 112).

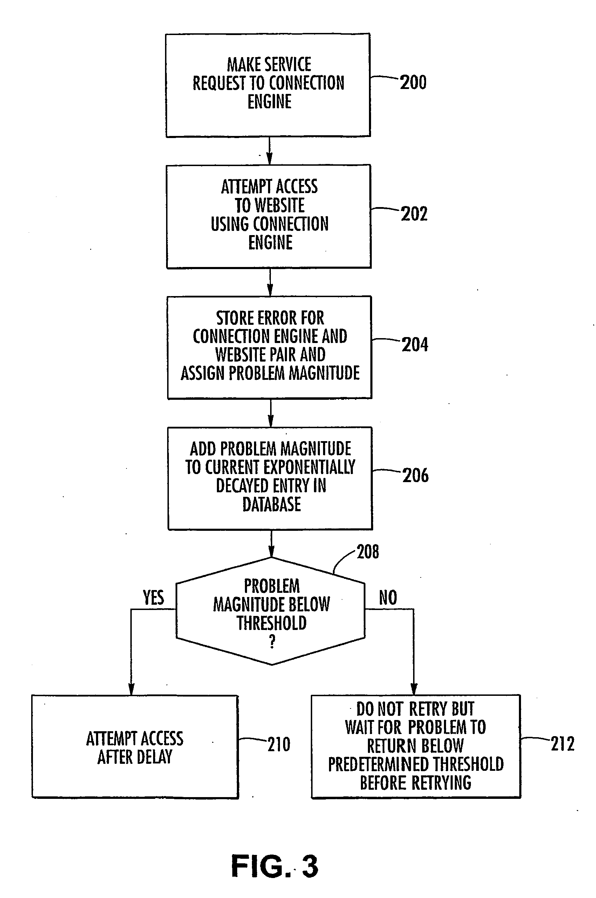

FIG. 3 shows a specific example that can be used for the method of the present invention. A proxy engine can use WAP, SMTP or other protocol and make a service request to a connection engine, which uses POP, IMAP or HTTPmail protocol (block 200). The connection engine attempts to access the server (block 202). The database stores the type of error for a particular connection engine and server pair and assigns a problem magnitude (block 204). It then adds the problem magnitude to the current exponentially decayed entry in the database along with a time stamp (block 206). If the problem magnitude is below a predetermined threshold (block 208), the next attempt to access the server is made after a sufficient delay (block 210).
If the problem magnitude exceeds a predetermined threshold, the system will not retry and instead waits for the problem to return below the predetermined threshold before retrying (block 212). This delay could be a function of a preset rate of decay of the problem magnitude. Thresholds can be chosen as required. Also, different connection engines can be chosen.

It should be understood that the software and programming used for embodiments of the present invention can vary, and different applications can be used. The mobile office platform **20** and other gateways can use web services technology and include different application services used by those skilled in the art. Web services could include a combination of programming and data, which are available from a web server for web users, or the use of other web-connected programs as provided by an application service provider. Web services could use an extensible mark-up language (XML) as a standard for formatting data to be communicated.

Any type of arrangement can be used to access the mobile office platform **20** or other gateways, including a peer-to-peer arrangement, a central server, or other architecture and line or wireless communications. Also, middleware could be used. Data formats could be standardized and data exchanged using the extensive mark-up language (XML), which is a foundation for the web services description language (WSDL). Different web servers could be used, including the open source Apache or Microsoft's Internet information server (IIS). Other web services could include Novel's web server for users of its netware operating system or the IBM family of Lotus domino service, for example, for IMB's OS/390 and AS/400 customers. Naturally, any web server should be able to download requests for file transfer protocol (FTP) files in a preferred embodiment.

The mobile office platform **20** or other gateways can have various import agents that are designed to retrieve configuration data from email clients, including Eudora and Netscape besides the Outlook and Outlook Express email clients as illustrated. The mobile office platform or other gateways could include a Messaging Application Programming Interface (MAPI) to retrieve any configuration data for a MAPI-compliant email client. MAPI provides the application programming interface (API) to ensure system independence for messaging applications. A layer of functionality could be provided between applications at any underlying messaging systems and act as messaging middleware. MAPI-compliant applications could communicate through a MAPI subsystem to MAPI service providers that perform requested actions for clients and pass data back through a MAPI system to a MAPI client. Any mailbox configuration data could reside in a configuration registry of the user system. In other example embodiments, data could reside in email client specific configuration storage.

In the user system, the Microsoft Outlook Express mail client can access source mailboxes that use the Post Office Protocol (POP) or Internet Mail Access Protocol (IMAP). POP, of course, is the Internet mail server protocol that provides incoming message storage. The more recent protocol is POP3. POP is operative with a Simple Mail Transfer Protocol (SMTP). Any mail server could run both protocols if it is to receive, store and forward messages. The SMTP protocol exchanges messages from one mail server to another and hands messages to the required POP server for an email mailbox. A POP server can receive a message and hold it until another POP server is available. The IMAP version 4 also uses the SMTP transport mechanism, but it is a more flexible protocol because IMAP allows users to store mail on a mail server without downloading all new messages to a local machine. Internet mail services, of course, run SMTP and either POP or IMAP and receive incoming messages from any source without identity checking. Thus, mail can be selectively downloaded and read, message headers reviewed, hierarchical message stores built, an address book supported, and documents linked, authenticated and searched.

The mobile office platform or other gateway could generate configuration data objects and format data objects using an extensible mark-up language (XML) for submission to various XML-compliant web services. The server and/or web service could be a simple object access protocol (SOAP) compliant service.

XML, of course, as an extensive mark-up language, is a subset of the standard generalized mark-up language (SGML) and would allow data to be stored and published on servers and be richer in presentation. Custom tags could be created to define the content of documents. Common information formats could be created and the format and data shared on the Internet, corporate Internets and/or other networks. The mark-up symbols in XML could be unlimited and self-defining. The channel definition format (CDF) could describe any channel and a specific CDF file can contain data that specifies an initial web page and how it can be updated.

SOAP allows one program running in one kind of operating system to communicate with the program in the same or another type of operating system by using HTTP and XML for information exchange. SOAP could specify how to encode an HTTP header in an XML file, thus, allowing one computer to call a program in another computer and pass data, while also dictating how it can return a response. SOAP is advantageous to allow data to pass through firewall servers that screen-out requests other than those for known applications to a designated port. SOAP is an XML-based protocol that has at least three parts, including: (a) an envelope to define a framework for describing what is in a message; (b) a set of encoding rules for expressing application-defined data types; and (c) a convention for representing remote procedure calls and responses.

The mobile office platform **20** or other gateway could include software that is implemented as an ActiveX control as a component object model (COM) and provide a framework for building software components that communicate with each other. ActiveX controls could be automatically downloaded and executed by a web browser. Distributed object applications could be built in active web pages and ActiveX controls could be downloaded to different browsers and clients. ActiveX controls could be held in a web browser as a container and distributed over an Internet or corporate intranet. ActiveX controls could also manage and update web content and client systems and work closely with a user interface of a targeted operating system. Java applets or similar component objects could also be used instead of ActiveX controls. It should be understood for purposes of embodiments of the present invention that an object model control could also be any type of dynamic link library (DLL) module that runs in a container as an application program using a component object model program interface.

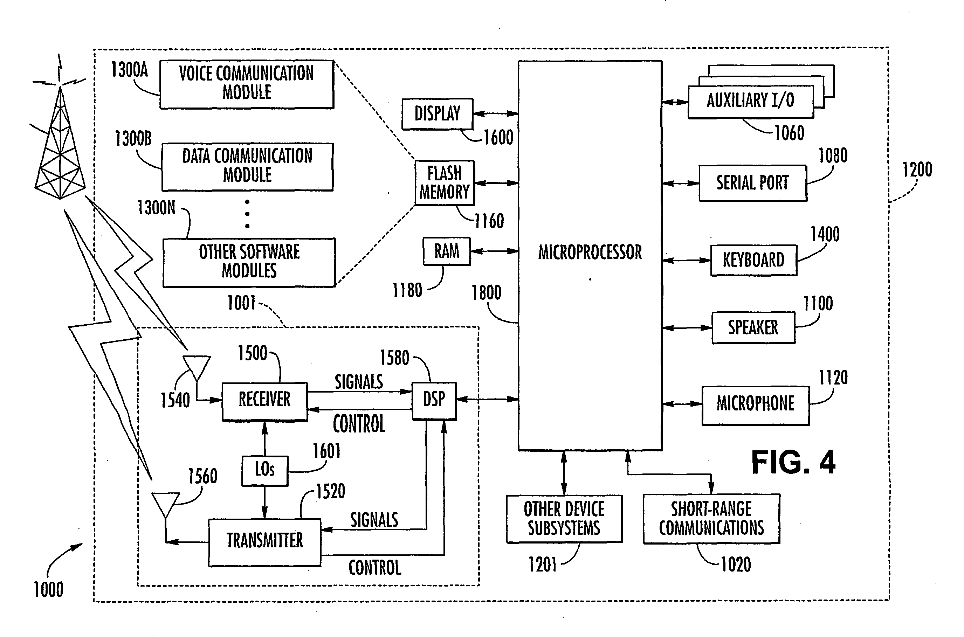

An exemplary hand-held mobile wireless communications device **1000** that can be used in the present invention is further described in the example below with reference to FIG. 4. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system. Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580, and** local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A communications system comprising:
a plurality of connection engines (14) that can be used by a client (24) for accessing servers (16) on the Internet;
means for performing an access attempt to a particular server using a first connection engine;
means for assigning a problem magnitude if the access attempt has failed;
a database (36) having stored therein a problem magnitude versus time for any server and connection engine pair;
means for adding the assigned problem magnitude along with a time stamp to a current exponentially decayed entry of the database corresponding to the particular server and first connection engine pair ; and
an intelligent routing engine (20a) operative with the database for querying the database and delaying any further attempts at accessing the particular server using the first connection engine when the problem magnitude of the entry exceeds a predetermined threshold until the problem magnitude of the entry decays to below the threshold.

2. A communications system (10) according to Claim 1, wherein said intelligent routing engine (20a) is operative for delaying any reattempts at accessing the server (16) until a problem magnitude returns to below a predetermined threshold.

3. A communications system (10) according to Claim 2, wherein any delay in reattempting access to the server (16) is a function of a preset rate of decay of a problem magnitude.

4. A communications system (10) according to Claim 1, wherein said database (36) includes data relating to a current problem magnitude for a failed access attempt to a server (16) that is added to a current exponentially decayed entry in the database.

5. A communications system (10) according to Claim 1, wherein said database (36) includes data relating to a problem magnitude versus time for any server (16) and connection engine (14) pair.

6. A communications system (10) according to Claim 1, wherein the means for assigning a problem is arranged to assign the problem magnitude for a failed access attempt based on network failures.

7. A communications system (10) according to Claim 1, wherein the means for assigning a problem is arranged to assign the problem magnitude for a failed access attempt based on failures unrelated to a network failure.

8. A communications system (10) according to Claim 7, wherein any failures unrelated to a network failure include an incorrect password and/or badly formed request.

9. A communications system (10) according to Claim 1, wherein said intelligent routing engine (20a) comprises a proxy server.

10. A communications system (10) according to Claim 1, wherein said intelligent routing engine (20a) is operative for accessing a server using a POP, IMAP or httpmail protocol.

11. A method of accessing a server (16) of a server on an Internet Protocol network in a communications system (10) comprising a plurality of connection engines (14) that can be used by a client for accessing servers (16), the method comprising the steps of:
attempting access to a particular server (16) using a first connection engine (14);
assigning a problem magnitude if the attempt at accessing the server (16) has failed; and
adding the assigned problem magnitude to a database (36) a storing problem magnitude versus time for any server and connection engine pair, wherein the assigned problem magnitude is added along with a time stamp to a current exponentially decayed entry of the database corresponding to the particular server and first connection engine pair;
delaying any further attempts at accessing the particular server (16) using the first connection engine when the problem magnitude of the entry exceeds a predetermined threshold until the problem magnitude of the entry decays to below the threshold.

12. A method according to Claim 11, and further comprising the step of delaying any reattempts at accessing the server (16) until the problem magnitude returns to below a predetermined threshold.

13. A method according to Claim 12, wherein the delay in reattempting access to the server (16) is a function of a preset rate of decay of the problem magnitude.

14. A method according to Claim 11, and further comprising the step of maintaining the database (36) of failed attempts at accessing the server (16).

15. A method according to Claim 14, wherein a current problem magnitude for a failed access attempt to a server (16) is added to a current exponentially decayed entry in the database (36) along with a time stamp.

16. A method according to Claim 14, and further comprising the step of storing in the database (36) the problem magnitude versus time for any server (16) and connection engine (14) pair.

17. A method according to Claim 14, and further comprising the step of tracking the magnitude of failure based on the problem magnitude of failed access attempts stored within the database (36).

18. A method according to Claim 11, wherein the step of assigning a problem magnitude comprises assigning a problem magnitude for a failed access attempt based on network failures.

19. A method according to Claim 11, wherein the step of assigning a problem magnitude comprises assigning a problem magnitude for a failed access attempt based on failures unrelated to a network failure.

20. A method according to Claim 19, wherein a failure unrelated to a network failure includes an incorrect password and/or badly formed request.

## Patentansprüche

1. Kommunikationssystem, das aufweist:
eine Vielzahl von Verbindungsmaschinen (14), die von einem Client (24) zum Zugreifen auf Server (16) im Internet verwendet werden können;
Mittel zum Durchführen eines Zugriffsversuchs auf einen bestimmten Server unter Verwendung einer ersten Verbindungsmaschine;
Mittel zum Zuweisen einer Problemgröße, wenn der Zugriffsversuch fehlgeschlagen ist;
eine Datenbank (36), die "Problemgröße versus Zeit" für jedes Server- und
Verbindungsmaschine-Paar gespeichert hat;
Mittel zum Hinzufügen der zugewiesenen Problemgröße zusammen mit einem Zeitstempel zu einem aktuellen exponentiell verfallenen Eintrag der Datenbank, der dem "bestimmter Server"- und "erste Verbindungsmaschine"-Paar entspricht; und
eine intelligente Routing-Maschine (20a), die mit der Datenbank betriebsfähig ist, zum Abfragen der Datenbank und Verzögern weiterer Versuche zum Zugreifen auf den bestimmten Server unter Verwendung der ersten Verbindungsmaschine, wenn die Problemgröße des Eintrags eine vorgegebene Schwelle übersteigt, bis die Problemgröße des Eintrags unter die Schwelle fällt.

2. Kommunikationssystem (10) gemäß Anspruch 1, wobei die intelligente Routing-Maschine (20a) betriebsfähig ist zum Verzögern aller wiederholter Versuche zum Zugreifen auf den Server (16), bis eine Problemgröße unter eine vorgegebene Schwelle zurückkehrt.

3. Kommunikationssystem (10) gemäß Anspruch 2, wobei eine Verzögerung bei einem wiederholten Zugriffsversuch auf den Server (16) eine Funktion einer vorgegebenen Rate eines Verfalls einer Problemgröße ist.

4. Kommunikationssystem (10) gemäß Anspruch 1, wobei die Datenbank (36) Daten umfasst, die eine aktuelle Problemgröße für einen fehlgeschlagenen Zugriffsversuch auf einen Server (16) betreffen, die zu einem aktuellen exponentiell verfallenen Eintrag in der Datenbank hinzugefügt wird.

5. Kommunikationssystem (10) gemäß Anspruch 1, wobei die Datenbank (36) Daten umfasst, die "Problemgröße versus Zeit" für jedes Server- (16) und Verbindungsmaschine-(14) Paar betreffen.

6. Kommunikationssystem (10) gemäß Anspruch 1, wobei das Mittel zum Zuweisen eines Problems ausgebildet ist, die Problemgröße für einen fehlgeschlagenen Zugriffsversuch basierend auf Netzwerkausfällen zuzuweisen.

7. Kommunikationssystem (10) gemäß Anspruch 1, wobei das Mittel zum Zuweisen eines Problems ausgebildet ist, die Problemgröße für einen fehlgeschlagenen Zugriffsversuch basierend auf Ausfällen zuzuweisen, die unabhängig von einem Netzwerkausfall sind.

8. Kommunikationssystem (10) gemäß Anspruch 7, wobei die Ausfälle, die unabhängig von einem Netzwerkausfall sind, ein falsches Passwort und/oder eine schlecht geformte Anforderung umfassen.

9. Kommunikationssystem (10) gemäß Anspruch 1, wobei die intelligente Routing-Maschine (20a) einen Proxy-Server aufweist.

10. Kommunikationssystem (10) gemäß Anspruch 1, wobei die intelligente Routing-Maschine (20a) betriebsfähig ist zum Zugreifen auf einen Server unter Verwendung eines POP-, IMAP- oder httpmail-Protokolls.

11. Verfahren zum Zugreifen auf einen Server (16) eines Servers auf einem Internetprotokollnetzwerk in einem Kommunikationssystem (10), das eine Vielzahl von Verbindungsmaschinen (14) aufweist, die von einem Client zum Zugreifen auf Server (16) verwendet werden können, wobei das Verfahren die Schritte aufweist:
Versuchen eines Zugriffs auf einen bestimmten Server (16) unter Verwendung einer ersten Verbindungsmaschine (14);
Zuweisen einer Problemgröße, wenn der Versuch zum Zugreifen auf den Server (16) fehlgeschlagen ist; und
Hinzufügen der zugewiesenen Problemgröße zu einer Datenbank (36), die "Problemgröße versus Zeit" für jedes Server- und Verbindungsmaschine-Paar gespeichert hat, wobei die zugewiesene Problemgröße zusammen mit einem Zeitstempel zu einem aktuellen exponentiell verfallenen Eintrag der Datenbank hinzugefügt wird, der dem "bestimmter Server"- und "erste Verbindungsmaschine"-Paar entspricht;
Verzögern weiterer Versuche zum Zugreifen auf den bestimmten Server (16) unter Verwendung der ersten Verbindungsmaschine, wenn die Problemgröße des Eintrags eine vorgegebene Schwelle übersteigt, bis die Problemgröße des Eintrags unter die Schwelle fällt.

12. Verfahren gemäß Anspruch 11, und weiter aufweisend den Schritt eines Verzögerns aller wiederholter Versuche zum Zugreifen auf den Server (16), bis die Problemgröße unter eine vorgegebene Schwelle zurückkehrt.

13. Verfahren gemäß Anspruch 12, wobei die Verzögerung bei einem wiederholten Zugriffsversuch auf den Server (16) eine Funktion einer vorgegebenen Rate eines Verfalls der Problemgröße ist.

14. Verfahren gemäß Anspruch 11, und weiter aufweisend den Schritt eines Führens der Datenbank (36) von fehlgeschlagenen Versuchen zum Zugreifen auf den Server (16).

15. Verfahren gemäß Anspruch 14, wobei eine aktuelle Problemgröße für einen fehlgeschlagenen Zugriffsversuch auf einen Server (16) zu einem aktuellen exponentiell verfallenen Eintrag in der Datenbank (36) zusammen mit einem Zeitstempel hinzugefügt wird.

16. Verfahren gemäß Anspruch 14, und weiter aufweisend den Schritt eines Speicherns der "Problemgröße versus Zeit" für jedes Server- (16) und Verbindungsmaschine-(14) Paar in der Datenbank (36).

17. Verfahren gemäß Anspruch 14, und weiter aufweisend den Schritt eines Verfolgens der Größe eines Ausfalls basierend auf der Problemgröße von fehlgeschlagenen Zugriffsversuchen, die in der Datenbank (36) gespeichert sind.

18. Verfahren gemäß Anspruch 11, wobei der Schritt des Zuweisens einer Problemgröße aufweist ein Zuweisen einer Problemgröße für einen fehlgeschlagenen Zugriffsversuch basierend auf Netzwerkausfällen.

19. Verfahren gemäß Anspruch 11, wobei der Schritt des Zuweisens einer Problemgröße aufweist ein Zuweisen einer Problemgröße für einen fehlgeschlagenen Zugriffsversuch basierend auf Ausfällen, die unabhängig von einem Netzwerkausfall sind.

20. Verfahren gemäß Anspruch 19, wobei ein Ausfall, der unabhängig von einem Netzwerkausfall sind, ein falsches Passwort und/oder eine schlecht geformte Anforderung umfasst.

## Revendications

1. Système de communications, comprenant :
une pluralité de moteurs de connexion (14) qui peuvent être utilisés par un client (24) pour accéder à des serveurs (16) sur l'internet ;
un moyen destiné à exécuter une tentative d'accès à un serveur particulier en utilisant un premier moteur de connexion ;
un moyen destiné à attribuer une amplitude de problème si la tentative d'accès a échoué ;
une base de données (36) dans laquelle est stockée une amplitude de problème dans le temps pour chaque paire d'un serveur et d'un moteur de connexion ;
un moyen destiné à ajouter l'amplitude de problème, avec un horodatage, à un enregistrement courant de la base de données avec décroissance exponentielle qui correspond à la paire composée du serveur particulier et du premier moteur de connexion ; et
un moteur de routage intelligent (20a) coopérant avec la base de données afin de l'interroger et de retarder toutes les nouvelles tentatives d'accès au serveur particulier à l'aide du premier moteur de connexion lorsque l'amplitude de problème de l'enregistrement dépasse un seuil prédéterminé, en attendant que l'amplitude de problème de l'enregistrement chute au-dessous du seuil.

2. Système de communications (10) selon la revendication 1, dans lequel ledit moteur de routage intelligent (20a) est en mesure de retarder de nouvelles tentatives d'accès au serveur (16) en attendant qu'une amplitude de problème chute au-dessous d'un seuil prédéterminé.

3. Système de communications (10) selon la revendication 2, dans lequel le retard des nouvelles tentatives d'accès au serveur (16) est une fonction d'une vitesse prédéfinie de décroissance d'une amplitude de problème.

4. Système de communications (10) selon la revendication 1, dans lequel ladite base de données (36) contient des données pour une amplitude de problème courante pour un échec de tentative d'accès au serveur (16) qui est ajoutée à un enregistrement courant avec décroissance exponentielle dans la base de données.

5. Système de communications (10) selon la revendication 1, dans lequel ladite base de données (36) comprend des données liées à une amplitude de problème dans le temps pour chaque paire d'un serveur (16) et d'un moteur de connexion (14).

6. Système de communications (10) selon la revendication 1, dans lequel le moyen destiné à attribuer un problème est conçu pour attribuer l'amplitude de problème à une tentative d'accès ayant échoué en fonction des défaillances du réseau.

7. Système de communications (10) selon la revendication 1, dans lequel le moyen destiné à attribuer un problème est conçu pour attribuer l'amplitude de problème à une tentative d'accès ayant échoué sur la base de défaillances qui ne sont pas liées à une défaillance du réseau.

8. Système de communications (10) selon la revendication 7, dans lequel les défaillances qui ne sont pas liées à une défaillance du réseau comprennent un mot de passe incorrect et/ou une requête mal formulée.

9. Système de communications (10) selon la revendication 1, dans lequel ledit moteur de routage intelligent (20a) comprend un serveur mandataire.

10. Système de communications (10) selon la revendication 1, dans lequel ledit moteur de routage intelligent (20a) est en mesure d'accéder à un serveur à l'aide d'un protocole POP, IMAP ou httpmail.

11. Procédé d'accès à un serveur (16) sur un réseau au protocole internet dans un système de communication (10) comprenant une pluralité de moteurs de connexion (14) qui peuvent être utilisés par un client pour accéder à des serveurs (16), le procédé comprenant les étapes consistant à :
tenter un accès à un serveur particulier (16) à l'aide d'un premier moteur de connexion (14) ;
attribuer une amplitude de problème si la tentative d'accès au serveur (16) a échoué ; et
ajouter l'amplitude de problème attribuée à une base de données (36) qui stocke une amplitude de problème dans le temps pour chaque paire d'un serveur et d'un moteur de connexion, l'amplitude de problème étant ajoutée avec un horodatage à un enregistrement courant de la base de données avec décroissance exponentielle qui correspond à la paire composée du serveur particulier et du premier moteur de connexion ;
retarder toutes les nouvelles tentatives d'accès au serveur particulier (16) à l'aide du premier moteur de connexion lorsque l'amplitude de problème de l'enregistrement dépasse un seuil prédéterminé, en attendant que l'amplitude de problème de l'enregistrement chute au-dessous du seuil.

12. Procédé selon la revendication 11, comprenant en outre l'étape consistant à retarder de nouvelles tentatives d'accès au serveur (16) en attendant qu'une amplitude de problème chute au-dessous d'un seuil prédéterminé.

13. Procédé selon la revendication 12, dans lequel le retard des nouvelles tentatives d'accès au serveur (16) est une fonction d'une vitesse prédéfinie de décroissance d'une amplitude de problème.

14. Procédé selon la revendication 11, comprenant en outre l'étape consistant à tenir à jour la base de données (36) des échecs de tentative d'accès au serveur (16).

15. Procédé selon la revendication 14, dans lequel une amplitude de problème courante pour un échec de tentative d'accès à un serveur (16) est ajoutée avec un horodatage à un enregistrement courant avec décroissance exponentielle dans la base de données (36).

16. Procédé selon la revendication 14, comprenant en outre l'étape consistant à stocker dans la base de données (36) l'amplitude de problème en fonction du temps pour chaque paire composée d'un serveur (16) et d'un moteur de connexion (14).

17. Procédé selon la revendication 14, comprenant en outre l'étape consistant à suivre l'amplitude de défaillance sur la base des amplitudes de problème stockées dans la base de données (36) pour les échecs de tentative d'accès.

18. Procédé selon la revendication 11, dans lequel l'étape d'attribution d'une amplitude de problème comprend l'étape consistant à attribuer une amplitude de problème à une tentative d'accès ayant échoué, sur la base de défaillances du réseau.

19. Procédé selon la revendication 11, dans lequel l'étape d'attribution d'une amplitude de problème comprend l'étape consistant à attribuer une amplitude de problème à une tentative d'accès ayant échoué, sur la base de défaillances qui ne sont pas liées à une défaillance du réseau.

20. Procédé selon la revendication 19, dans lequel une défaillance qui n'est pas liée à une défaillance du réseau comprend un mot de passe incorrect et/ou une requête mal formulée.
